# EUROPÄISCHE PATENTSCHRIFT

(11) **EP 2 390 530 B1**
(45) Veröffentlichungstag und Bekanntmachung des Hinweises auf die Patenterteilung: **28.03.2012**
(21) Anmeldenummer: 10005655.5
(22) Anmeldetag: 31.05.2010
(51) Int. Cl.: F16G 13/04, F16G 13/06, C22C 38/00

(54) **Gelenkkette mit Kettenlaschen aus Bor-Mangan-Stahl**
Articulated chain with chain links made of boron manganese steel
Chaîne articulée dotée de maillons en acier bore-manganèse

(43) Veröffentlichungstag der Anmeldung: 30.11.2011
(73) Patentinhaber: iwis motorsysteme GmbH & Co. KG, 81369 München (DE)
(72) Erfinder: Kirchner, Steffen, 83565 Tegernau (DE); Belmer, Stefan, 85646 Anzing (DE)
(74) Vertreter: Grünecker, Kinkeldey, Stockmair & Schwanhäusser

(56) Entgegenhaltungen:
- EP-A1- 0 739 993
- EP-A1- 1 865 086
- EP-A2- 1 386 978
- DE-A1- 19 807 852
- DE-A1-102007 062 400
- DE-U1-202005 011 573
- DE-U1-202006 002 416
- GB-A- 949 163

## Beschreibung

Die vorliegende Erfindung bezieht sich auf eine Gelenkkette, insbesondere eine Antriebskette eines Verbrennungsmotors, mit jeweils über ein Kettengelenk miteinander verbundenen Kettengliedern, die jeweils mindestens zwei Kettenlaschen aus legiertem Stahl mit jeweils zwei Gelenköffnungen aufweisen, wobei sich zum Bilden eines Kettengelenks jeweils ein Gelenkbolzen durch eine der Gelenköffnungen erstreckt.

Herkömmliche Gelenkketten, die als Antriebsketten oder Steuerketten in Verbrennungsmotoren eingesetzt werden, unterliegen in ihrem Einsatz einem hohen Verschleiß, insbesondere im Bereich des Kettengelenks. Neben dem Einsatz von legierten Stählen zur Herstellung von Kettenlaschen und Gelenkbolzen gibt es im Stand der Technik vielfältige Versuche, die Verschleißfestigkeit des Kettengelenks zu verbessern. Neben der Verwendung spezieller hochlegierter Kohlenstoffstähle wird eine verbesserte Verschleißbeständigkeit des Kettengelenks durch das Härten oder Beschichten der Oberflächen des Kettengelenks erreicht. Dabei werden als Material für die Herstellung von Kettenlaschen sowie der Gelenkbolzen bevorzugt Vergütungsstähle eingesetzt, z.B. 42 CrMo 4 oder 13 CrMoV 13 9, die neben einer hohen Festigkeit des Materials und guten Verschleißeigenschaften an der Lagerfläche des Kettengelenks auch die Möglichkeit der Verbesserung der Verschleißfestigkeit durch ein Härten der Oberflächenschichten ermöglichen. Derartige Gelenkketten sind beispielsweise in der DE 20 2005 011 573 U1 beschrieben.

Für die Herstellung von verschleißbeständigen Kettenlaschen kommen dabei nur Vergütungsstähle mit Legierungselementen wie Chrom, Molybdän und Vanadium zum Einsatz, die neben einer thermischen Härtbarkeit des gesamten Bauteils auch das gezielte Härten der Oberflächenschichten durch Diffusionsverfahren ermöglichen. Legierte Stähle mit anderen Legierungselementen werden nicht für die Herstellung von Kettenlaschen und/oder Gelenkbolzen verwendet, da bei erhöhten Festigkeitswerten oftmals die Sprödigkeit des Materials oder die Festigkeitsabweichungen im Material signifikant zunehmen. Beispielsweise weisen Legierungsstähle mit dem Legierungselement Bor gute Festigkeitswerte sowie eine hohe Härte auf und lassen sich darüber hinaus problemlos thermisch härten, jedoch ist deren Einsatz auf großformatige Bauteile für Verschleiß- und Verstärkungsanwendungen beschränkt, beispielsweise Versteifungsprofile in Fahrzeugen, Konstruktionsteile für landwirtschaftliche Maschinen, Raupenfahrzeugketten, Verschleißbleche oder Stanzwerkzeuge. Die Druckschrift EP 739 993 A1 offenbart verschiedene Legierungszusammensetzungen für Bor-Mangan-Stähle sowie deren Anwendungen für großformatige Bauteile. Bedingt durch die schlechte Mischbarkeit des Legierungselements Bor in kohlenstoffhaltigen Stählen erhöht sich bei kleinformatigen Bauteilen die Varianz der individuellen Festigkeit dieser Einzelbauteile sehr stark, weshalb borlegierte Stähle insbesondere nicht bei Bauteilen eingesetzt werden, die aus einer Reihe von kleinformatigen Elementen zusammengesetzt sind und deren schwächstes Glied das Verschleißverhalten bzw. die Betriebsdauer bestimmt. Ein Beispiel hierfür sind Gelenkketten mit einer Vielzahl von miteinander verbundenen Kettengliedern, bei der das schwächste Kettenglied die Betriebsdauer bzw. den Ausfall der Gelenkkette bestimmt. Trotz annähernd gleicher Festigkeit kann sich die insbesondere in kleinen Bauteilen auswirkende ungleichmäßige Verteilung des Legierungselements Bor im Stahl zu Bauteilen führen, deren Festigkeit um viele Prozentpunkte variiert.

Mit der fortschreitenden technischen Entwicklung insbesondere im Automobilbereich steigen auch die Anforderungen und der Innovationsdruck für Gelenkketten, die in Verbrennungsmotoren als Antriebs- oder Steuerkette eingesetzt werden. Neben dem ständigen Verbesserungsbedarf von Bauteilen im Rahmen der Entwicklung neuer Motoren besteht im Hinblick auf den in der Automobilindustrie üblichen Kostendruck in Verbindung mit hohen Stückzahlen generell die Notwendigkeit zur Innovation und im Hinblick auf gattungsgemäße Gelenkketten kostengünstige Lösungskonzepte mit geringen Verschließproblematiken bereitzustellen.

Der vorliegenden Erfindung liegt daher die Aufgabe zugrunde, eine Gelenkkette mit guten Verschleißeigenschaften und geringen Herstellungskosten bereitzustellen.

Diese Aufgabe wird bei einer gattungsgemäßen Gelenkkette dadurch gelöst, dass die Kettenlaschen aus einem Bor-Mangan-Stahl hergestellt sind, wobei für einen Einsatz als Kettenlasche der Bor-Mangan-Stahl einen Massenanteil an Kohlenstoff (C) zwischen 0,35 und 0,45 Gewichtsprozent (Gew.-%) aufweist.

Der Einsatz von Borstählen als warmgewalztes härtbares Stahlblech zur Herstellung von Verschleiß- und Versteifungsteilen in stark belasteten Einsatzbereichen wie der Landwirtschaft oder für Baumaschinen ist gut bekannt. Borlegierte Stähle weisen neben einer hohen Festigkeit auch eine gute Zähigkeit im Kern des Materials sowie eine problemlose Wärmebehandlung auf. Durch den Zusatz von Bor kann gegenüber anderen Legierungselementen bei einer gleichen Härte ein niedriger Kohlenstoffgehalt und damit eine verbesserte Verarbeitbarkeit erreicht werden. Darüber hinaus ermöglicht Bor auf teure Legierungselemente wie Chrom, Nickel und Molybdän ganz oder teilweise zu verzichten. Im Gegensatz zu kohlenstoffaffinen Elementen wie Chrom und Molybdän ist die Verteilung des verhältnismäßig kleinen Anteils des Legierungselements Bor im Legierungsstahl jedoch sehr ungleichmäßig, weshalb borlegierte Stähle trotz der guten Materialeigenschaften nur für großformatige Verschleiß- und Konstruktionsteile eingesetzt werden, bei denen sich die Konzentrationsunterschiede und damit auch die Festigkeitsunterschiede ausgleichen. Bor-Mangan-Stähle werden als warmgewalzte Stahlbleche bereitgestellt, die mit einem relativ geringen Prozentsatz an Bor von 0,0008 bis 0,0080 % legiert sind, um die Festigkeitseigenschaften des legierten Stahls zu verbessern. Bei kleinformatigen in Reihe geschalteten Bauteilen führt die unterschiedliche Konzentration des Bors im Material zu einer hohen Varianz der Festigkeit der einzelnen Bauteile und damit zu einem für die mittlere Festigkeit des Materials vorzeitigen Ausfall.

Überraschenderweise zeigen Gelenkketten mit Kettenlaschen, die aus einem Bor-Mangan-Stahl mit einem Kohlenstoffgehalt zwischen 0,35 und 0,45 Gew.-% hergestellt sind, z.B. 38 MnB 5 oder 42 MnB 5, ein günstigeres Verschleißverhalten, als Gelenkketten mit Kettenlaschen aus einem Vergütungsstahl mit kohlenstoffaffinen Legierungselementen, z.B. 42 CrMo 4, trotz einer vergleichbaren Festigkeit der Materialien. Im Hinblick auf die Mischungsproblematik des Legierungselements Bor in kohlenstoffhaltigen Stählen ist bei einer vergleichbaren Festigkeit ein insgesamt eher ein schlechteres Verschleißverhalten, d.h. geringe Lebenserwartung und verstärkte Längung der Gelenkkette über der Betriebszeit, oder maximal ein vergleichbares Verschleißverhalten zu erwarten. Unabhängig von der Montageart und Bauweise der Gelenkkette reduziert sich bei Laufzeitversuchen die Längung einer erfindungsgemäßen Gelenkkette mit Kettenlaschen aus Bor-Mangan-Stahl gegenüber einer Gelenkkette mit Laschen aus einem herkömmlichen Vergütungsstahl (42 CrMo 4) um mindestens 10 %. Da in den einzelnen Kettenlaschen darüber hinaus keine weiteren negative Verschleißanzeichen festgestellt werden konnten, ist bei einer erfindungsgemäßen Ausgestaltung einer Gelenkkette auch mit einer Verlängerung der Betriebszeit von ebenfalls mindestens 10 % zu rechnen.

Ein weiterer Vorteil einer erfindungsgemäßen Gelenkkette, bei der die Kettenlaschen aus einem Bor-Mangan-Stahl hergestellt sind, ist die Vermeidung von Seigerungen in dem zur Herstellung der Kettenlaschen verwendeten warmgewalzten Bandmaterial aus Vergütungsstahl. Seigerungen entstehen durch die kohlenstoffaffinen Legierungselemente Chrom und Molybdän, die beispielsweise in der Warmbandbramme mit dem Kohlenstoff des Vergütungsstahls zu sich regional konzentrierenden Karbiden gebunden werden. Bei der Walzbearbeitung mit Zwischenglühen der Bramme werden diese Karbide dann aufgelöst und die Kohlenstoff bzw. Legierungskonzentrationen ausgewalzt, was zu regional ungleichmäßiger Konzentration der Legierungselemente sowie des Kohlenstoffs vor allem quer, aber auch längs zur Walzrichtung führt. Entsprechend werden aus den regionalen Seigerungen in der Bramme Seigerungslinien im Warmband. Selbst wenn die beim Gießen der Bramme entstehenden Chrom- und Molybdänkarbide bei einer Wärmebehandlung wieder aufgelöst werden, so bleiben regional doch Unterschiede in der Konzentration der Legierungselemente Kohlenstoff, Chrom und Molybdän bestehen, wobei in diesen Regionen mit höherer Konzentration beim Abkühlen wieder Karbide aus zusammendiffundierdem Kohlenstoff und Chrom und/oder Molybdän entstehen. Wenn die Seigerungslinien in dem warmgewalzten Bandmaterial in geometrisch-topografisch ungünstigen Bereichen, beispielsweise den Gelenköffnungen der Kettenlaschen, ein- oder auslaufen, so kommt es an den Chrom- oder Molybdänkarbiden zu lokalen Spannungsüberhöhungen. Je nach Herstellung der Kettenlaschen können insbesondere im Bereich der Seigerungslinien Stanzriefen entstehen, die die lokalen Spannungsüberhöhungen nochmals verstärken. Seigerungen in Vergütungsstählen mit kohlenstoffaffinen Legierungselementen können daher zu einem deutlich früheren Versagen der betroffenen Kettenlaschen einer Gelenkkette führen, im Vergleich zu Kettenlaschen mit homogener Legierungsverteilung. Kettenlaschen aus einem Bor-Mangan-Stahl sind demgegenüber frei von Seigerungslinien, da die Legierungselemente Mangan und Bor nicht kohlenstoffaffin sind und ein entsprechender Wirkmechanismus bei warmgewalzten Bändern aus Mangan-Bor-Stahl nicht vorkommen kann.

Zweckmäßigerweise beträgt dabei der Massenanteil an Mangan des Bor-Mangan-Stahls zwischen 1,1 und 1,7 Gewichtsprozente. Weiter ist es für eine optimale Kettenlasche von Vorteil, wenn der Massenanteil an Bor des Bor-Mangan-Stahls zwischen 0,0008 und 0,0080 Gewichtsprozent, bevorzugt zwischen 0,004 und 0,008 Gewichtsprozent beträgt. Günstigerweise beträgt für eine feste Ausgestaltung der Kettenlasche die Zugfestigkeit des Bor-Mangan-Stahls zwischen 500 und 700 N/mm², bevorzugt zwischen 550 und 650 N/mm², wobei sich diese Zugfestigkeit auf den gewalzten Zustand eines Bor-Mangan-Stahl-Bands vor einer Weiterbehandlung, d.h. der Herstellung der Kettenlaschen und einer abschließenden Wärmebehandlung, bezieht. Diese speziellen Materialeigenschaften des Bor-Mangan-Stahls sind einzeln oder in Kombination miteinander für eine optimierte, verschleißfeste Ausgestaltung der vollständig aus einem Bor-Mangan-Stahl hergestellten Kettenlasche für eine erfindungsgemäße Gelenkkette von Vorteil.

Eine günstige Ausführungsform sieht vor, dass der Gelenkbolzen aus einem Kohlenstoffstahl oder einem legierten Stahl hergestellt ist und eine einsatzgehärtete, karborierte, nitrierte oder chromierte Oberflächenschicht aufweist. In Kombination mit karbidisch oder nitridisch beschichteten Gelenkbolzen bzw. einsatzgehärteten Gelenkbolzen, weisen die Kettenlaschen aus Bor-Mangan-Stahl einer erfindungsgemäßen Gelenkkette ein besonders günstiges Verschleißverhalten mit einer höheren Dauerfestigkeit der Kettenlaschen auf.

Eine bevorzugte Ausbildung sieht vor, dass die Kontur der Kettenlaschen aus einem Stahlblech aus Bor-Mangan-Stahl ausgestanzt ist, wobei die nachgeschnittenen Bereiche der Kontur der Kettenlaschen, insbesondere die Gelenköffnungen, einen Glattschnittanteil in der Schnittfläche von mindestens 75 %, bevorzugt mindestens 80 % aufweist. Ein hoher Glattschnittanteil verringert den Verschleiß der Kontakt- und Gelenkflächen. Insbesondere reduziert ein hoher Glattschnittanteil in der Gelenköffnung der Kettenlaschen den im jeweiligen Kettengelenk auftretenden Verschleiß der Gelenkpartner, d.h. des Gelenkbolzens und der Gelenköffnung, da sich die tragende Fläche des Kettengelenks erhöht. Damit wird auch die Längung der Gelenkkette im Verhältnis zu ihrer Laufzeit reduziert. Darüber hinaus verringert ein erhöhter Glattschnittanteil die mechanische Belastung und damit auch den Verschleiß des Schneidwerkzeugs bei der Herstellung der Kettenlasche.

Von Vorteil ist es weiter, wenn das Verhältnis der Dicke der Kettenlaschen, d.h. der Materialstärke des Bor-Mangan-Stahls zur Herstellung der Kettenlaschen zur Teilung der Kettenlaschen höchstens 0,45 beträgt. Kettenlaschen mit einer geringeren Dicke von maximal 3,5 mm und einer entsprechenden Teilung ermöglichen bei einer ausreichenden Festigkeit die notwendige Flexibilität der Gelenkkette, ohne dass sich der Glattschnittanteil der Schnittfläche der Gelenköffnungen, entsprechend die verschleißarme Gelenkfläche des Kettengelenks reduziert.

Um die Verwendung der erfindungsgemäßen Gelenkkette in besonderen Einsatzbereichen, z.B. als Antriebsmittel für stufenlos verstellbare Getriebe oder als Steuerkette zu ermöglichen, kann die Gelenkkette als Laschenkette, insbesondere als Zahnlaschenkette, ausgebildet sein. Bevorzugt kann sich dabei der Gelenkbolzen zum Bilden des Kettengelenks durch die Gelenköffnung von mindestens zwei außen angeordneten Außenkettenlaschen und einer oder mehrerer als Paket alternierend angeordneter Innenkettenlaschen erstrecken. Solche Gelenkketten aus Laschenpaketen mit Innen- und Außenkettenlaschen werden als einfache Laschenketten oder Zahnlaschenketten in großen Stückzahlen mit einem hohen Automatisierungsgrad für viele industrielle Bereiche hergestellt. Da sich der Gelenkbolzen dabei durch mehrere nebeneinander angeordnete Gelenköffnungen erstreckt, die sich bei alternierender Anordnung gegeneinander verdrehen, ist hier das gute Gleitverhalten der Gelenkbolzen in den Gelenköffnungen der Kettenlaschen aus Bor-Mangan-Stahl von besonderer Bedeutung.

Für einen weiteren Einsatzbereich kann die Gelenkkette als Hülsen- oder Rollenkette ausgebildet sein. Je nach Aufbau der Hülsen- oder Rollenkette sind zwei im Abstand zueinander angeordnete Kettenlaschen mit einer Gelenkhülse verbunden, durch die sich der Gelenkbolzen des Kettengelenks erstreckt und die Kettenlaschen des nächsten Kettenglieds in einem einfachen Herstellungsprozess verbindet.

Eine vorteilhafte Ausführungsform dieser Gelenkkette sieht vor, dass abwechselnd Innenkettenglieder, die mindestens zwei Innenkettenlaschen und zwei die Innenkettenlaschen im parallelen Abstand zueinander verbindenden Gelenkhülsen aufweisen, und Außenkettenglieder, die mindestens zwei Außenkettenlaschen und zwei die Außenkettenlaschen im parallelen Abstand zueinander verbindende Gelenkbolzen aufweisen, über jeweils ein Kettengelenk miteinander verbunden sind. Gelenkketten aus Innen- und Außenkettengliedern, insbesondere Rollen- und Hülsenketten, werden sowohl für den Automobilbereich aber auch für nahezu alle anderen industriellen Bereiche als Massenprodukt hergestellt, was entsprechend zu geringen Kosten dieser Form von Gelenkketten führt. Dabei sind die Gelenkhülsen vielfach fest mit den Innenlaschen verbunden, insbesondere durch Einpressen oder Einkleben.

Im Folgenden werden Ausführungsbeispiele der vorliegenden Erfindung anhand beigefügter Zeichnungen näher erläutert. Es zeigen:
- Fig. 1: eine Draufsicht auf eine erfindungsgemäße Laschenkette,
- Fig. 2: eine Seitenansicht der Laschenkette aus Fig. 1 in einer Ausführung als Zahn- kette,
- Fig. 3: eine Seitenansicht der Laschenkette aus Fig. 1 in einer Ausführung als Flyer- kette,
- Fig. 4: eine Draufsicht auf eine weitere Ausführungsform einer erfindungsgemäßen Laschenkette mit einem bereichsweisen Schnitt,
- Fig. 5: eine Seitenansicht einer Zahnlasche der Zahnkette aus Fig. 2,
- Fig. 6: ein Teil einer vergrößerten Schnittansicht der Zahntasche aus Fig. 5 entlang der Längsachse der Kettenlasche, und
- Fig. 7: ein Diagram der Längung einer erfindungsgemäßen Laschenkette über der Betriebszeit im Vergleich zu einer herkömmlichen Laschenkette.

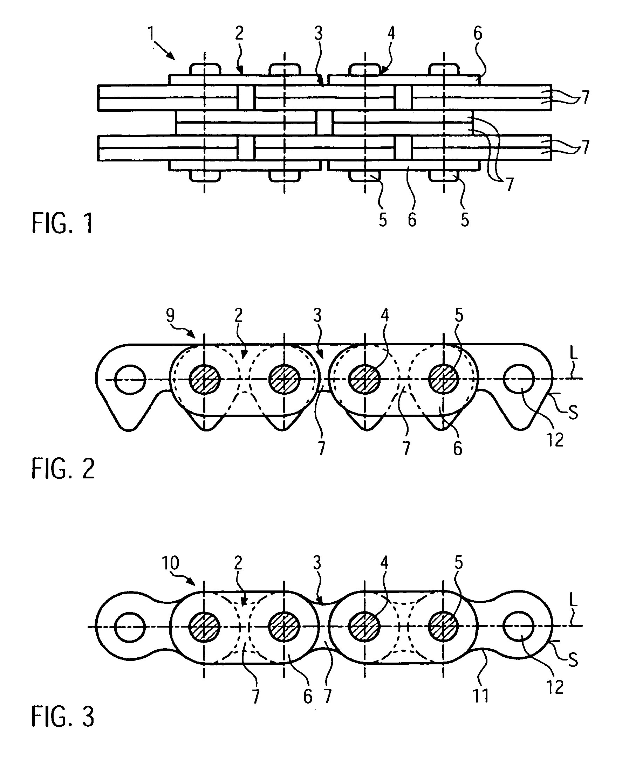

Fig. 1 zeigt eine Draufsicht auf eine erfindungsgemäße Gelenkkette 1 in einer Ausführungsform als Laschenkette mit einander abwechselnden Außenkettengliedern 2 und Innenkettengliedern 3, die jeweils in einem Kettengelenk 4 mittels eines Gelenkbolzens 5 miteinander verbunden sind. Die Außenkettenglieder 2 bestehen dabei aus zwei seitlich außen parallel im Abstand zueinander angeordneten Außenkettenlaschen 6 und zwei als Paket angeordnete innen liegende Innenkettenlaschen 7, sowie den zwei Kettenbolzen 5 der zugehörigen Kettengelenke 4, die sich durch die Außenkettenlaschen 6 und Innenkettenlaschen 7 hindurch erstrecken. Die Innenkettenglieder 3 weisen jeweils zwei Pakete von Innenkettenlaschen 8 auf, wobei die Innenkettenlaschen schwenkbar auf den Kettenbolzen 5 der Außenkettenglieder 2 zwischen den Außenkettenlaschen 6 und den Innenkettenlaschen 7 des Außenkettenglieds 2 angeordnet sind, um die Innenkettenglieder 3 mit den angrenzenden Außenkettengliedern 2 zu verbinden.

Fig. 2 zeigt eine erfindungsgemäße Gelenkkette 1 in einer Ausführungsform als Zahnlaschenkette 9. Dabei sind die Innenkettenlaschen 7 des Außenkettenglieds 2 und die Innenkettenlaschen 7 des Innenkettenglieds 3 als Zahnlaschen 14 ausgebildet, während die Außenkettenlaschen 6 in der gezeigten Ausführungsform als Führungslaschen ohne vorstehende Zähne 15 und ohne Vertiefungen 16 zum Eingriff in die Zähne eines zugehörigen Kettenrads ausgebildet sind. In anderen Ausführungsformen können die Außenkettenlaschen 6 ebenfalls als Zahnlaschen ausgebildet sein. Zusätzlich oder alternativ zu den Außenkettenlaschen 6 können optional auch die Innenkettenlaschen 7 des Außenkettenglieds 2 als innen liegende Führungslaschen vorgesehen sein.

Demgegenüber zeigt Fig. 3 eine erfindungsgemäße Gelenkkette 1 in einer Ausführungsform als Flyerkette 10. Bei der Flyerkette 10 sind sowohl die Außenkettenlaschen 6 und die Innenkettenlaschen 7 des Außenkettenglieds 2 als auch die Innenkettenlaschen 7 des Innenkettenglieds 3 als im Wesentlichen gerade Kettenlaschen ausgebildet, ohne ein- oder beidseitig vorstehende Zähne bzw. Vertiefungen zum Eingriff in die Zähne eines zugehörigen Kettenrads. In der gezeigten Ausführungsform sind die Außenkettenlaschen 6 als-gerade Laschen geformt, während die Innenlaschen 7 tailliert ausgebildet sind, d.h. in beiden Rückenbereichen in Längsrichtung der Innenkettenlaschen 7 eine Taillierung 11 in Form konkaver Aussparungen aufweisen. Neben der Taillierung 11 können die Kettenlaschen zur festigkeitsneutralen Einsparung von Material zusätzliche Bohrungen oder Ausschnitte aufweisen. Darüber hinaus können auch die Außenkettenlaschen 6 mit einer Taillierung 11 und/oder Ausschnitten ausgebildet sein.

Unabhängig von der Ausgestaltung der erfindungsgemäßen Gelenkkette 1 als Zahnlaschenkette 9 oder als Flyerkette 10 weisen die Außenkettenlaschen 6 und die Innenlaschen 7 jeweils zwei Gelenköffnungen 12 auf, die auf der Längsachse L der Außenkettenlasche 6 bzw. lnnenkettenlasche 7 versetzt zueinander angeordnet und den jeweiligen Stirnseiten S der Kettenlasche zugeordnet sind. Die Gelenkbolzen 5 der Kettengelenke 4 erstrecken sich jeweils durch die Gelenköffnungen 12 der außen liegenden Außenkettenlaschen 6 sowie der dazwischen angeordneten Innenkettenlaschen 7, so dass sich zwischen den Außenkettengliedern 2 und Innenkettengliedern 3 eine schwenkbare Verbindung, das Kettengelenk 4, ausbildet.

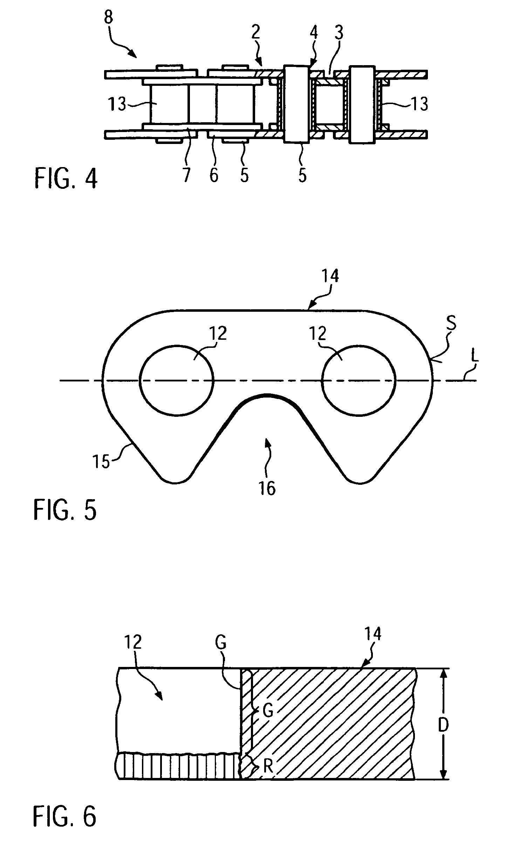

Fig. 4 zeigt eine weitere Ausführungsform der erfindungsgemäßen Gelenkkette 1, die in einer Ausführungsform als Hülsenkette 8 ausgebildet ist. Im Folgenden werden die wesentlichen Unterschiede zu den in den Figuren 1 bis 3 gezeigten Laschenketten beschrieben. Für identische und wirkungsgleiche Elemente werden die gleichen Bezugsziffern verwendet. Hinsichtlich der Ausführungsform und Funktion nicht im detail erläuterter Elemente ist auf die obige Beschreibung verwiesen.

Die Hülsenkette 8 aus Fig. 4 weist ebenfalls einander abwechselnde Außenkettenglieder 2 und Innenkettenglieder 3 auf, die jeweils über ein Kettengelenk 4 miteinander verbunden sind. Das Innenkettenglied 3 besteht hierbei jeweils aus zwei parallel angeordneten Innenkettenlaschen 7 und zwei die Innenkettenlaschen 7 miteinander verbindende Gelenkhülsen 13, wobei die Gelenkhülsen 13 senkrecht zu den Innenkettenlaschen 7 stehen und fest mit den Innenkettenlaschen 7 verbunden sind, insbesondere durch Pressen. Die Außenkettenglieder 2 bestehen wiederum aus zwei parallel angeordneten Außenkettenlaschen 6, die mit zwei Gelenkbolzen 5 miteinander verbunden sind, wobei die Gelenkbolzen 5 drehbar in den Gelenkhülsen 13 der Innenkettenglieder 3 gelagert sind. Das Außenkettenglied 2 ist daher mittels dem Gelenkbolzen 5 drehbar mit dem Innenkettenglied 3 verbunden, so dass die Außenkettenlaschen 6 parallel zu den Innenkettenlaschen 7 verlaufen. Der Gelenkbolzen 5 des Kettengelenks 4 ist in den Gelenkhülsen 13 der Innenkettenglieder 3 drehbar gelagert, wobei die Achsen der ineinander verlaufenden Gelenkbolzen 5 und Gelenkhülsen 13 zueinander fluchten.

Die in Fig. 4 gezeigte Hülsenkette 8 kann zusätzlich mit Laufrollen versehen werden und so als Rollenkette ausgeführt sein. Bei einer derartigen Rollenkette sind bei den Innenkettengliedern 3 zusätzlich Laufrollen vorgesehen, die zwischen den Innenkettenlaschen 7 drehbar auf den Gelenkhülsen 13 angeordnet sind. Die Laufrollen stehen dabei senkrecht zu den Innenkettenlaschen 7, so dass sich die Achsen der ineinander verlaufenden Laufrollen, Gelenkhülsen 13 und Gelenkbolzen 5 zueinander fluchten. Zwischen den Laufrollen und den Gelenkhülsen 13 ist ein Fettpolster vorgesehen, das zur Geräusch- und Stoßdämpfung der Rollenkette beiträgt.

Fig. 5 zeigt eine Ausführungsform einer Innenkettenlasche 7 bzw. Außenkettenlasche 6 für eine Zahnlaschenkette 9 gemäß der vorliegenden Erfindung. Diese Zahnlasche 14 weist zwei Gelenköffnungen 12 auf, die auf der Längsachse L der Zahnlasche 14 versetzt zueinander angeordnet sind und den jeweiligen Stirnseiten S der Zahnlasche 14 zugeordnet sind. Durch diese Gelenköffnungen 12 erstrecken sich die hier nicht gezeigten Gelenkbolzen 5. Die Zahnlasche 14 weist zum Eingriff in die Zähne eines zugehörigen Kettenrads zwei einseitig zur Längsachse L vorstehende Zähne 15 sowie eine zwischen den beiden Zähnen 15 vorgesehene Vertiefung 16 auf.

Die Herstellung von Kettenlaschen 6, 7 für erfindungsgemäße Gelenkketten 1 erfolgt üblicherweise in einem Stanzvorgang, bei dem aus einem Stahlband aus einem Bor-Mangan-Stahl abwechselnd von der Oberseite und Unterseite des Stahlbands verschiedene Abschnitte der Kontur der Kettenlasche ausgestanzt werden. Bei der Herstellung der in Fig. 5 gezeigten Zahnlasche 14 werden zunächst die nachzuschneidenden Bereiche der Außenkontur, d.h. die Flanken der Zähne 15, die Innenkontur der Vertiefung 16 sowie der Rückenbereich der Zahnlasche 14, und die Gelenköffnungen 12 mittels geeigneter Stanzstempel aus dem Stahlband vorgestanzt. Danach werden diese vorgestanzten Bereiche mit einem Nachschneidstempel fein nachgeschnitten um in der Schnittfläche der nachgeschnittenen Konturen bzw. der Gelenköffnungen 12 einen möglichst großen Glattschnittanteil G zu erreichen. Als letzter Stanzschritt werden die nicht nachgeschnittenen Bereiche der Kontur aus dem Stahlband in einem einfachen Schneidvorgang ausgestanzt und so die Zahnlasche 14 aus dem Stahlband herausgelöst. Abschließend erfolgt je nach Anforderungen an die Zahnlasche 14 bzw. an die nachgeschnittenen Bereiche, sowie die Qualität des Glattschnittanteils G ein Gleitschleifen zum Entgraten der Einzugsseite sowie Glättung der Stanzriefen und des Rissflächenbereichs R.

Wie in Fig. 6 zu erkennen, beträgt der Glattschnittanteil G in der Gelenköffnung 12 einer aus Bor-Mangan-Stahl hergestellten Zahnlasche 14 mindestens 75 % oder mehr der Laschendicke D der ausgestanzten Zahnlasche 14 bzw. jeder anderen entsprechend hergestellten Kettenlasche 6, 7. In Stanzrichtung unterhalb des Glattschnittanteils G folgt ein kleinerer Bereich eines Rissflächengewebes R, der Grobschnittanteil, der bedingt durch den Abriss des Schneidvorgangs beim Nachschneiden der Kontur bzw. der Gelenköffnungen 12 eine sehr raue Oberfläche aufweist, die größtenteils gegenüber dem Glattschnittanteil G zurückversetzt ist. Da die Dauerfestigkeit einer Zahnlasche 14 bzw. anderer Kettenlaschen 6, 7 für Gelenkketten 1 sich zu einem wesentlichen Teil aus dem Glattschnittanteil G ergibt, über den im Wesentlichen die gesamte Belastung beim Betrieb einer Gelenkkette 1, insbesondere einer Zahnlaschenkette 9, übertragen wird, kann mit einer erfindungsgemäßen Gelenkkette 1 gegenüber herkömmlichen Gelenkketten die Betriebszeit bzw. die zulässige Belastung beim Betrieb der erfindungsgemäßen Gelenkkette 1 erhöht werden.

Neben dem Glattschnittanteil G in der Gelenköffnung 12 bildet die Zylinderoberfläche der Gelenkbolzen 5 die Lagerfläche des Kettengelenks 4, weshalb auch die Ausbildung der Gelenkbolzen 5 aus einem legierten Stahl vorteilhaft ist. Zusätzlich kann die Oberflächenschicht der Gelenkbolzen einsatzgehärtet sein oder eine karborierte, nitrierte, karbonitrierte oder chromierte Oberflächenschicht aufweisen, die die Verschleißbeständigkeit des Kettengelenks 4 auf der Seite des Gelenkbolzens 5 erhöht.

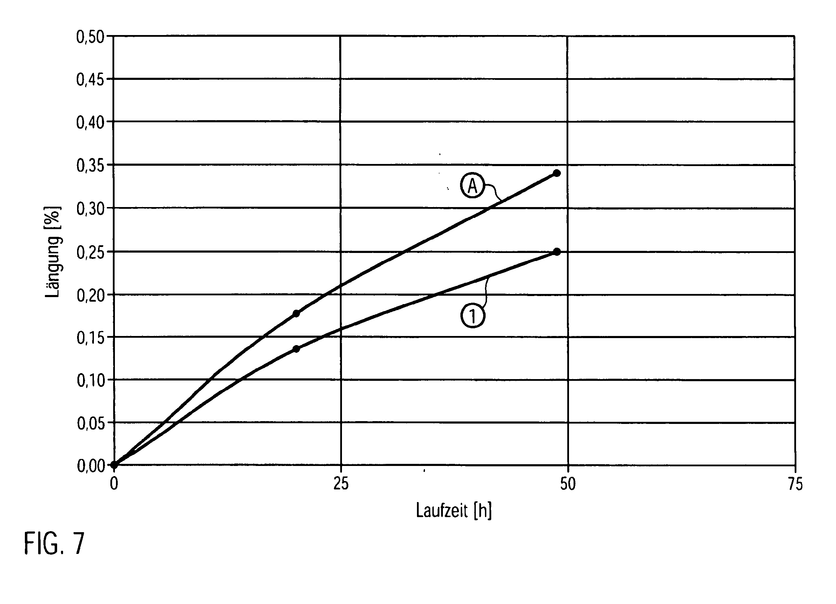

Fig. 7 zeigt die grafische Darstellung der prozentualen Kettenlängung einer erfindungsgemäßen Gelenkkette 1 in einem Laufversuch über der Laufzeit im Vergleich zu einer herkömmlichen Gelenkkette A. Der einzige Unterschied zwischen der erfindungsgemäßen Gelenkkette 1 und der herkömmlichen Gelenkkette A besteht in dem Material der Kettenlaschen. Alle anderen Details, wie die verwendeten Gelenkbolzen, aber auch die Montage der Ketten sowie die Herstellung der Kettenlaschen, sind jeweils identisch.

Bei der herkömmlichen Gelenkkette A wurden die Kettenlaschen aus einem Chrom-Molybdän-Stahl, 42 CrMo 4, hergestellt, wobei das oben beschriebene übliche Stanzverfahren verwendet wurde. Demgegenüber wurden die Kettenlaschen der erfindungsgemäßen Gelenkkette 1 aus einem Bor-Mangan-Stahl, 42 MnB 5, in einem identischen Produktionsverfahren hergestellt. Dabei weisen die unterschiedlichen Stahllegierung, der Chrom-Molybdän-Stahl für die Kettenlaschen der herkömmlichen Gelenkkette A und der Bor-Mangan-Stahl für die Kettenlaschen der erfindungsgemäßen Gelenkkette 1 vergleichbare Festigkeitswerte auf, die prinzipiell vergleichbare Verschleißeigenschaften erwarten lassen.

Überraschenderweise verringert sich die prozentuale Längung einer erfindungsgemäßen Gelenkkette 1 gegenüber einer baugleichen herkömmlichen Gelenkkette A signifikant. Je nach Ausführung der Kette und verschiedener Herstellungsdetails, beispielsweise die Nachbearbeitung der Gelenköffnungen nach dem Stanzen mittels Gleitschleifen, die Oberflächenbehandlung der Gelenkbolzen, die Montage der Gelenkketten sowie deren Teilung reduziert sich die prozentuale Längung der erfindungsgemäßen Gelenkkette 1 gegenüber einer herkömmlichen Gelenkkette A um mindestens 10 % bis zu 30 %. Diese deutliche Reduzierung der Längung der erfindungsgemäßen Gelenkkette 1 über der Laufzeit, und damit auch der zu erwartenden Betriebszeit der Gelenkkette 1 ist völlig überraschend, da die Mischungsproblematik im Zusatz des Legierungselements Bor in Stählen bedingt durch die vergleichsweise geringe Menge Bor von etwa 0,005 bis 0,008 Gew.-% bei den für Kettenlaschen notwendigen geringen Materialstärken große Festigkeitsschwankungen und damit auch geringe Betriebszeiten und hohe verschleißbedingte Folgen wie die Längung der Gelenkkette zu erwarten wären.

Die bei der erfindungsgemäßen Gelenkkette überraschenderweise festgestellte signifikante Verschleißreduzierung bzw. Reduzierung der Kettenlängung, ist im Hinblick auf die vergleichbare Festigkeit des eingesetzten Bor-Mangan-Stahls für die Kettenlaschen 6, 7 nur durch eine Reihe von überraschenden, positiven Effekten durch die Verwendung eines Bor-Mangan-Stahls zur Herstellung der Kettenlaschen 6, 7 zu erklären. Vielmehr scheint sich hier die Kombination verschiedener Aspekte der Herstellung von Kettenlaschen 6, 7 aus Bor-Mangan-Stahl, u.a. die Vergrößerung des Glattschnittanteils, Reduzierung von Stanzriefen und Stanzgrad, Vermeidung von Seigerungslinien sowie das verbesserte Gleitverhalten im Kettengelenk 4 gegenüber der Oberflächenschicht des Gelenkbolzens 5 zu einer überraschend starken positiven Verschleißverbesserung zu führen, die die bekannten Nachteile des Legierungselements Bor im Hinblick auf die Mischungsproblematik und Konzentrationsunterschiede im Material bei erfindungsgemäßen Gelenkketten überkompensieren.

## Patentansprüche

1. Gelenkkette (1), insbesondere eine Antriebskette eines Verbrennungsmotors, mit jeweils über ein Kettengelenk (4) miteinander verbundenen Kettengliedern (2, 3), die jeweils mindestens zwei Kettenlaschen (6, 7) aus legiertem Stahl mit jeweils zwei Gelenköffnungen (12) aufweisen, wobei sich zum Bilden eines Kettengelenks (4) jeweils ein Gelenkbolzen (5) durch eine der Gelenköffnungen (12) erstreckt,
**dadurch gekennzeichnet, dass** die Kettenlaschen (6, 7) aus einem Bor-Mangan-Stahl hergestellt sind, wobei der Massenanteil an Kohlenstoff des Bor-Mangan-Stahls zwischen 0,35 und 0,45 Gew.-% beträgt.

2. Gelenkkette (1) nach Anspruch 1,
**dadurch gekennzeichnet, dass** der Massenanteil an Mangan des Bor-Mangan-Stahls zwischen 1,1 und 1,7 Gew.-% beträgt.

3. Gelenkkette (1) nach Anspruch 1 oder 2,
**dadurch gekennzeichnet**, der Massenanteil an Bor des Bor-Mangan-Stahls zwischen 0,0008 und 0,0080 Gew.%, bevorzugt zwischen 0,0040 und 0,0080 Gew.-% beträgt.

4. Gelenkkette (1) nach einem der Ansprüche 1 bis 3,
**dadurch gekennzeichnet, dass** die Zugfestigkeit des Bor-Mangan-Stahls zwischen 500 und 700 N/mm², bevorzugt zwischen 550 und 650 N/mm² beträgt.

5. Gelenkkette (1) nach einem der Ansprüche 1 bis 4,
**dadurch gekennzeichnet, dass** das Verhältnis der Dicke (D) der Kettenlaschen zur Teilung der Kettenlasche höchstens 0,45, beträgt.

6. Gelenkkette (1) nach einem der Ansprüche 1 bis 5,
**dadurch gekennzeichnet, dass** der Gelenkbolzen aus einem Kohlenstoffstahl oder einem legierten Stahl hergestellt ist und eine einsatzgehärtete, carborierte, nitrierte oder chromierte Oberflächenschicht aufweist.

7. Gelenkkette (1) nach einem der Ansprüche 1 bis 6,
**dadurch gekennzeichnet, dass** die Kontur der Kettenlaschen aus einem Stahlblech aus Bor-Mangan-Stahl ausgestanzt ist, wobei die nachgeschnittenen Bereiche der Kontur der Kettenlaschen, insbesondere die Gelenköffnungen (12) einen Glattschniftanteil (G) in der Schnittfläche von mindestens 75 %, bevorzugt mindestens 80 % aufweisen.

8. Gelenkkette (1) nach einem der Ansprüche 1 bis 7,
**dadurch gekennzeichnet, dass** die Gelenkkette (1) als Laschenkette, insbesondere als Zahnlaschenkette (9) ausgebildet ist.

9. Gelenkkette (1) nach Anspruch 8,
**dadurch gekennzeichnet, dass** sich der Gelenkbolzen (5) zum Bilden des Kettengelenks (4) durch die Gelenköffnungen (12) von mindestens zwei außen angeordneten Außenkettenlaschen (6) und einer oder mehrerer als Paket oder alternierend angeordneten Innenkettenlaschen (7) erstrecken.

10. Gelenkkette (1) nach einem der Ansprüche 1 bis 9,
**dadurch gekennzeichnet, dass** die Gelenkkette (1) als Hülsenkette (8) oder Rollenkette ausgebildet ist.

11. Gelenkkette (1) nach Anspruch 10,
**dadurch gekennzeichnet, dass** abwechselnd Innenkettenglieder (3), die mindestens zwei Innenkettenlaschen (7) und zwei die Innenkettenlaschen (7) im parallelen Abstand zueinander verbindenden Gelenkhülsen (13) aufweisen, und Außenkettenglieder (2), die mindestens zwei Außenkettenlaschen (6) und zwei die Außenkettenlaschen (6) im parallelen Abstand zueinander verbindende Gelenkbolzen (5) aufweisen, über jeweils ein Kettengelenk (4) miteinander verbunden sind.

## Claims

1. Link chain (1), in particular a drive chain of a combustion engine with chain links (2, 3) each connected to each other by a chain link (4) which chain links (2, 3) each comprise at least two link plates (6, 7) made of alloyed steel each with two link openings (12) wherein one link pin (5) in each case extends through one of the link openings (12) to form a chain link (4), **characterised in that** the link plates (6, 7) are manufactured from a boron-manganese steel wherein the mass proportion of the carbon in the boron-manganese steel is between 0.35 and 0.45% by weight.

2. Link chain (1) according to claim 1 **characterised in that** the mass proportion of manganese in the boron-manganese steel is between 1.1 and 1.7% by weight.

3. Link chain (1) according to either claim 1 or 2, **characterised in that**, the mass proportion of boron in the boron-manganese steel is between 0.0008 and 0.0080% by weight, preferably between 0.0040 and 0.0080% by weight.

4. Link chain (1) according to any one of claims 1 to 3, **characterised in that**, the tensile strength of the boron-manganese steel is between 500 and 700 N/mm², preferably between 550 and 650 N/mm².

5. Link chain (1) according to any one of claims 1 to 4, **characterised in that**, the ratio of the thickness (D) of the link plates to the pitch of the link plate is at most 0.45.

6. Link chain (1) according to any one of claims 1 to 5, **characterised in that**, the link pin is manufactured from a carbon steel or from an alloyed steel and comprises a case-hardened, carburised, nitrided or chromed surface layer.

7. Link chain (1) according to any one of claims 1 to 6, **characterised in that**, the profile of the link plates is punched out of a steel plate made of boron-manganese steel wherein the trimmed regions of the profile of the link plates, in particular the link openings (12) have a smooth cut portion (G) of the cut surface of at least 75%, preferably at least 80%.

8. Link chain (1) according to any one claims 1 to 7, **characterised in that**, the link chain (1) is designed as a plate-link chain, in particular as a toothed plate-link chain (9).

9. Link chain (1) according to claim 8, **characterised in that**, the link pin (5), in order to form the chain link (4), extends through the link openings (12) from at least two externally arranged outer link plates (6) and from one or a plurality of inner link plates (7) arranged as a package or alternating.

10. Link chain (1) according to any one of claims 1 to 9 **characterised in that** the link chain (1) is designed as a sleeve-type chain (8) or as a roller chain.

11. Link chain (1) according to claim 10 **characterised in that** alternately inner chain links (3) comprising at least two inner link plates (7) and two link sleeves (13) connecting the inner link plates (7) to one another in parallel offset, and outer chain links (2) comprising at least two outer link plates (6) and two link pins (5) connecting the outer link plates (6) to one another in parallel offset, are connected to one another by a chain link (4).

## Revendications

1. Chaîne articulée (1), en particulier chaîne d'entraînement d'un moteur à combustion interne, avec des maillons (2, 3) qui sont reliés par une articulation de chaîne (4) et qui comportent au moins deux maillons (6, 7) en acier allié pourvus chacun de deux ouvertures d'articulation (12), étant précisé que pour former une articulation de chaîne (4), un axe d'articulation (5) traverse l'une des ouvertures d'articulation (12),
**caractérisée en ce que** les plaques (6, 7) sont fabriquées à partir d'un acier bore-manganèse, étant précisé que la part en masse de carbone dans l'acier bore-manganèse est située entre 0,35 et 0,45 % en poids.

2. Chaîne articulée (1) selon la revendication 1, **caractérisée en ce que** la part en masse de manganèse dans l'acier bore-manganèse est située entre 1,1 et 1,7 % en poids.

3. Chaîne articulée (1) selon la revendication 1 ou 2, **caractérisée en ce que** la part en masse de bore dans l'acier bore-manganèse est située entre 0,0008 et 0,0080 % en poids, de préférence entre 0,0040 et 0,0080 % en poids.

4. Chaîne articulée (1) selon l'une des revendications 1 à 3, **caractérisée en ce que** la résistance à la traction de l'acier bore-manganèse est située entre 500 et 700 N/mm², de préférence entre 550 et 650 N/mm².

5. Chaîne articulée (1) selon l'une des revendications 1 à 4, **caractérisée en ce que** le rapport de l'épaisseur (D) des plaques sur leur pas est au maximum de 0,45.

6. Chaîne articulée (1) selon l'une des revendications 1 à 5, **caractérisée en ce que** l'axe d'articulation est fabriqué à partir d'un acier au carbone ou d'un acier allié, et présente une couche de surface cémentée, carburée, nitrurée ou chromée.

7. Chaîne articulée (1) selon l'une des revendications 1 à 6, **caractérisée en ce que** le contour des plaques est découpé dans une tôle en acier bore-manganèse, étant précisé que les zones recoupées du contour des plaques, en particulier les ouvertures d'articulation (12), présentent une part de coupe lisse (G), dans la surface de coupe, d'au moins 75 %, de préférence d'au moins 80 %.

8. Chaîne articulée (1) selon l'une des revendications 1 à 7, **caractérisée en ce que** la chaîne articulée (1) est conçue comme une chaîne à plaques, en particulier une chaîne à plaques dentées (9).

9. Chaîne articulée (1) selon la revendication 8, **caractérisée en ce que** l'axe d'articulation (5) pour former l'articulation de chaîne (4) traverse les ouvertures d'articulation (12) d'au moins deux plaques extérieures (6) disposées à l'extérieur, et d'une ou plusieurs plaques intérieures (7) disposées sous forme de paquet ou en alternance.

10. Chaîne articulée (1) selon l'une des revendications 1 à 9, **caractérisée en ce que** la chaîne articulée (1) est conçue comme une chaîne à douilles (8) ou comme une chaîne à rouleaux.

11. Chaîne articulée (1) selon la revendication 10, **caractérisée en ce que** des maillons intérieurs (3) qui comportent au moins deux plaques intérieures (7) et deux douilles d'articulation (13) reliant avec un espacement parallèle les plaques intérieures (7), et des maillons extérieurs (2) qui comportent au moins deux plaques extérieures (6) et deux axes d'articulation (5) reliant avec un espacement parallèle les plaques extérieures (6), sont reliés en alternance par une articulation de chaîne (4).
